# EUROPÄISCHE PATENTANMELDUNG

(11) **EP 1 530 049 A1**
(43) Veröffentlichungstag der Anmeldung: **11.05.2005**
(21) Anmeldenummer: 04026010.1
(22) Anmeldetag: 03.11.2004
(51) Int. Cl.: G01P 3/66, F42B 35/00

(54) **Vorrichtung zur Bestimmung der Geschossgeschwindigkeit, insbesondere im Mündungsbereich eines Waffenrohres**

(30) Priorität: 07.11.2003 DE 10352047
(71) Anmelder: Oerlikon Contraves Pyrotec AG, 8050 Zürich (CH)
(72) Erfinder: Giusti, Guido, Dr., 8805 Richterswil (CH); Walker, Johann, 8840 Einsiedeln (CH)
(74) Vertreter: Dietrich, Barbara, Dipl.-Ing.

(57) **Zusammenfassung**

Es wird vorgeschlagen, wenigstens zwei voneinander beabstandete Sensoren (2, 3, 12, 13) am bzw. direkt im Waffenrohr (1) zu integrieren. Beim Geschossdurchgang erfahren die Sensoren (2, 3, 12, 13) auf Grund des Gasdrucks am Geschossboden und des Druckes des Führungsbandes des Geschosses auf die Waffenrohrinnenseite eine Ausdehnung, welche in ein elektrisches Signal umgewandelt und wenn nötig nach Verstärkung (7) einer nachgeschalteten Signalverarbeitung (8) zugeführt wird. Als Sensoren (2, 3, 12, 13) werden vorzugsweise hochtemperaturbeständige Quarzsensoren in Form von Längsmessdübel verwendet, die entweder in einem Trägerring (4, 5) am bzw. um das Waffenrohr (1) oder direkt im Waffenrohr (1) angebracht sind.

## Beschreibung

Aus der CH 691 143 A5 ist eine Vorrichtung zur Messung der Geschossgeschwindigkeit an der Mündung eines Waffenrohres eines Geschützes hoher Kadenz bekannt. Dieses umfasst zwei in einem Abstand voneinander an einem Tragrohr angeordnet, auf Veränderung eines magnetischen Flusses ansprechende Sensoren, die mit einer Auswerteelektronik in Verbindung stehen. Dabei weist jeder Sensor ein Spulenpaar aus zwei Spulen und einem geschossenen magnetischen Kreis auf.

In der DE 697 09 291 T2 (EP 0 840 087 B1) werden Mittel zur Steuerung der Anfangsgeschwindigkeit eines Geschosses offenbart. Dabei ist ein Sensormittel vorgesehen, das einen auf die Mündungsgeschwindigkeit bezogenen Parameter messen kann. Dies erfolgt mit Hilfe der zumindest im bzw. am Waffenlauf angebrachten Sensoren, die einen höheren Druck im Waffenlauf aufnehmen können, welcher sich durch das Erhitzen der Treibgase am Waffenrohr einstellt. Als Sensoren werden Dehnungsmessstreifen vorgeschlagen, die so angepasst sind, dass sie Kontakt mit dem Waffenlauf haben. Dadurch soll leicht die Ausdehnungen des Waffenlaufs gemessen werden können. Aus der zeitlichen Differenz zwischen der Registrierung der Projektilpassage durch die beiden einzelnen Sensoren wird die Bewegung und damit die Geschwindigkeit des Projektils ermittelt.

Aufbauend auf diesem Prinzip stellt sich die Erfindung die Aufgabe, eine weitere Vorrichtung zur Bestimmung der Geschossgeschwindigkeit aufzuzeigen.

Gelöst wird die Aufgabe durch die Merkmale des Patentanspruchs 1.

Der Erfindung liegt die Idee zugrunde, wenigstens zwei voneinander beabstandete Sensoren oder Sensorenpaare am bzw. direkt im Waffenrohr zu integrieren. Beim Geschossdurchgang erfahren die Sensoren auf Grund des Gasdrucks am Geschossboden und des Druckes des Führungsbandes des Geschosses auf die Waffenrohrinnenseite eine Ausdehnung, welche in ein elektrisches Signal umgewandelt und wenn nötig nach Verstärkung einer nachgeschalteten Signalverarbeitung zugeführt wird. Als Sensoren werden vorzugsweise Quarzsensoren in Form von Längsmessdübel verwendet, die entweder in einem Trägerring am bzw. um das Waffenrohr oder direkt im Waffenrohr angebracht sind. Die Quarzsensoren haben den großen Vorteil, dass sie bereits kleinste Druckänderungen in Signale umwandeln können, selber sehr robust aufgebaut sind und passgenau, d.h., in festem Kontakt unverrutschbar zum Waffenrohr integriert werden können. Mechanische Belastungen des Waffenrohres haben dadurch keine Auswirkungen auf das Messergebnis der indirekten Druckmessung. Die Sensoren werden zudem nicht direkt dem Gasdruck ausgesetzt und zusätzlich zum vorhandenen Gehäuse in einer festen Struktur eingebaut.

Die Integration der Sensoren am bzw. im Waffenrohr ermöglicht die Messung der Mündungsgeschwindigkeit von Vollkaliber- und Unterkaliber - Munition ohne Beeinträchtigung, beispielsweise durch die Treibkäfige auf die Messung.

Eine weitere Möglichkeit besteht im direkten Einbau in der Mündungsbremse selbst. Insbesondere dann, wenn diese anstelle von Schlitzen Bohrungen aufweist, ist ein einfacher Einbauort gegeben.

Anhand von Ausführungsbeispielen bzw. Varianten mit Zeichnung soll die Erfindung näher erläutert werden. Es zeigt:
- Fig. 1: eine schematische Darstellung einer Anordnung von Sensoren am Waffenrohr,
- Fig. 2: eine schematische Darstellung der Anordnung der Sensoren direkt im Waffenrohr
- Fig. 3: eine Querschnittdarstellung des Einbaus eines Sensors in das Waffenrohr.

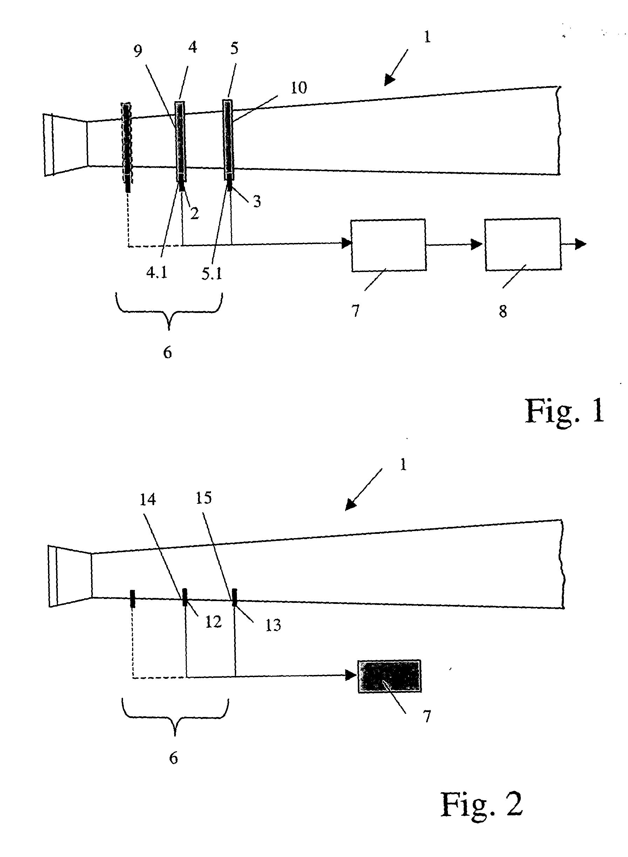

In Fig. 1 ist schematisch ein Waffenrohr 1 dargestellt, welches hier umfangsseitig wenigstens zwei Sensoren 2, 3 aufweist. Diese sind vorzugsweise jeweils in einem Trägerring 4, 5 integriert, welcher zur Aufnahme des jeweiligen Sensors 2, 3 eine Ausnehmung 4.1, 5.1 , hier eine Bohrung , aufweist. Die Ausnehmungen 4.1, 5.1 können sowohl radial als auch tangential - oder im Fall von Sensorpaaren radial und tangential - bezüglich der Rohrachse ausgebildet sein. Die Trägerringe 4, 5 sind vorzugsweise im Bereich der Rohrmündung 6 in einem definierten Abstand zueinander und von der Mündung angebracht. Einer mit den Sensoren 2, 3 elektrisch verbundene Verstärkerstufe 7 ist eine Signalverarbeitungs- bzw.

Signalauswerteeinheit 8 nachgeschaltet. Auf die Verstärkerstufe 7 kann verzichtet werden, wenn die Signalgrößen der Sensoren 2, 3 für eine Weiterverarbeitung als ausreichend anzusehen sind.
Die Sensoren 2, 3 sind derart gestaltet, dass sie in den Bohrungen 4.1, 5.1 passgenau sitzen und über den Trägerring 4, 5 mechanischen Kontakt zum Waffenrohr 1 besitzen. Die Trägerringe 4, 5 sind vorzugsweise auf das Waffenrohr 1 aufgeschrumpft. Dazu kann das Waffenrohr 1 an den vorgesehenen Stellen 9, 10 zylindrisch überdreht werden, an denen passganau jeweils der zylindrische Trägerring 4, 5 auf diesen zylindrischen Stellen 9, 10 aufgeschrumpft wird. Dadurch erhält die ganze Innenfläche der Trägerringe 4, 5 Kontakt zur Außenfläche des Waffenrohres 1.

In Fig. 2 sind die Sensoren 12, 13 im Waffenrohr 1 direkt eingebunden. Dazu sind in das Waffenrohr 1 Ausnehmungen 14, 15, vorzugsweise als Bohrungen eingebracht. Die Ausnehmungen 14, 15 können sowohl radial als auch tangential - oder im Fall von Sensorpaaren radial und tangential - bezüglich der Rohrachse ausgebildet sein. Die Sensoren 12, 13 sind dabei vorzugsweise von außen in die Ausnehmungen 14, 15 eingebracht.

Eine weitere Variante ergibt sich in einer nicht näher dargestellten Ausführung. Dabei weist das Waffenrohr wenigsten zwei voneinander beabstandete Wülste auf, unter bzw. in denen sich die Sensoren befinden. Diese Wülste werden bereits bei der Rohrfertigung ausgeformt und bilden integrale Bestandteile des Waffenrohres, sodass die Ausnehmungen radial oder tangential in die Wülste ausgebildet werden.

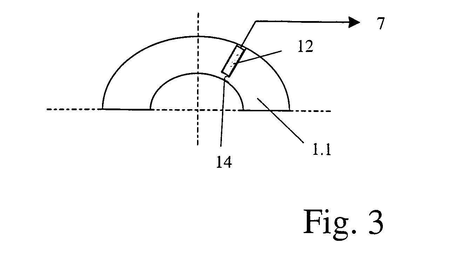

Eine weitere Möglichkeit nach Fig. 3 besteht darin, den Durchmesser der Rohrinnenwandung 1.1 annähernd voll auszunutzen, wobei die Sensoren 12, ,13 nicht größer als diese Innenwandung 1.1 sein dürfen und nicht in das Waffenrohr 1 hineinragen dürfen. Die Sensoren 12, 13 sind dabei durch einen dünnen Rest der Rohrinnenwandung 14 geschützt, um so nicht direkt dem Gasdruck ausgesetzt zu werden.

Den Sensoren 12, 13 ist wie in Fig. 1 aufgezeigt, zumindest über eine Verstärkerstufe 7 eine Signalauswerteeinheit 8 nachgeschaltet. Die Auswertung erfolgt je auch hier nach Art und Nutzung der Messung in bekannter Art und Weise. So wird beispielsweise aus der zeitlichen Differenz zwischen der Registrierung der Projektilpassage durch die beiden einzelnen Sensoren die Bewegung und damit die Geschwindigkeit eines nicht näher dargestellten Projektils ermittelt.

Als Sensoren 2, 3, 12, 13 bieten sich sogenannte Hochtemperatur-Quarz-Längsmessdübel mit positiver oder negativer Ladungsabgabe an. Diese haben die Fähigkeit in festen Strukturen Dehnungen dieser Strukturen messen zu können. Die Dehnung der Struktur (Waffenrohr 1 mit Trägerring 4, 5 oder Waffenrohr 1 allein) erfolgt wie folgt: Der vom verbrannten Treibladungspulver (nicht näher dargestellt) entstehende Gasdruck am Geschossboden des ebenfalls nicht näher dargestellten Projektils und der Druck des Führungsbandes des Geschosses auf die Waffenrohrinnenseite dehnt das Waffenrohr 1 beim Geschossdurchgang. Diese Dehnung wird dem Gehäuse des Längenmessdübels 2, 3, 12, 13 weitergegeben. Der Quarz im Gehäuse registriert die Dehnung, wodurch eine Ladung erzeugt wird. Das daraus resultierende Signal wird über die Verstärkerstufe 7 an die Signalauswerteeinheit 8 geführt.

## Patentansprüche

1. Vorrichtung zur Bestimmung der Geschossgeschwindigkeit, insbesondere im Mündungsbereich eines Waffenrohres (1), aufweisend wenigstens zwei voneinander beabstandete Sensoren (2, 3, 12, 13) oder Sensorpaare, welche am und / oder im Waffenrohr (1) integriert sind, auf die Geschwindigkeit eines Projektils bezogene Parameter messen und diese zur Auswertung über eine Verstärkerstufe (7) an eine nachgeschaltete Signalauswerteeinheit (8) geben, wobei die Sensoren (2, 3, 12, 13) in einer Ausnehmung oder Durchführung (4.1, 5.1) eines am Waffenrohr (1) befestigten Trägerringes (4, 5) oder direkt in Ausnehmungen (14, 15) des Waffenrohres (1) eingebunden sind.

2. Vorrichtung nach Anspruch 1, **dadurch gekennzeichnet, dass** die Sensoren (2, 3, 12, 13) hochtemperaturbeständige Längsmessdübel sind.

3. Vorrichtung nach Anspruch 1 oder 2, **dadurch gekennzeichnet, dass** das Waffenrohr (1) zur Aufnahme der Trägerringe (4, 5) an entsprechenden Stellen (9, 10) überdreht ist, wobei die Trägerringe (4, 5) auf diese Stellen (9, 10) aufgeschrumpft sind.

4. Vorrichtung nach einem der Ansprüche 1 bis 3, **dadurch gekennzeichnet, dass** die Ausnehmungen oder Durchführungen (4.1, 5.1, 14. 15) Bohrungen sind.
